# EUROPEAN PATENT APPLICATION

(11) **EP 3 035 240 A1**
(43) Date of publication of application: **22.06.2016**
(21) Application number: 15195882.4
(22) Date of filing: 23.11.2015
(51) Int. Cl.: G06K 9/00

(54) **AUTHENTICATION APPARATUS, METHOD, AND PROGRAM**

(30) Priority: 15.12.2014 JP 2014252716
(71) Applicant: FUJITSU LIMITED, Kawasaki-shi, Kanagawa 211-8588 (JP)
(72) Inventor: TAKEMOTO, Yuji, Kawasaki-shi, Kanagawa 211-8588 (JP); HATANAKA, Takahiro, Kawasaki-shi, Kanagawa 211-8588 (JP); TAKAMOTO, Kenshi, Kawasaki-shi, Kanagawa 211-8588 (JP)
(74) Representative: Cooper-Rolfe, Elizabeth Louise

(57) **Abstract**

An authentication apparatus includes a detecting part to detect an environmental illuminance, a retrieving part to retrieve, from a storage that stores registered iris data in association with registered environmental illuminances, one of the registered iris data stored in association with a registered environmental illuminance having a minimum difference with the environmental illuminance detected by the detecting means at a time of an authentication, an imaging part to image an imaging target to obtain an image data at the time of the authentication, an image processing part to extract an input iris data from the image data obtained by the imaging part, and a matching part to match the input iris data to the one of the registered iris data retrieved by the retrieving part. A first process that includes the detecting and the retrieving, and a second process that includes the imaging, the extracting, and the matching, are executed in parallel.

## Description

### FIELD

The embodiments discussed herein are related to an authentication apparatus, an authentication method, and an authentication program.

### BACKGROUND

Biometric authentication apparatuses that use biometric information such as a fingerprint, an iris, or the like, are utilized in various fields. The iris authentication authenticates an individual by utilizing pattern features of the iris, that is, a donut-shaped part excluding a pupil in a dark area of an eye. The pattern features of the human eye virtually do not change after two years from birth, and thus, iris patterns to be compared are unlikely to change with lapse of time. For this reason, much attention is drawn to the iris authentication due to advantages of the iris authentication, such as a high authentication accuracy and a contactless authentication that can be achieved.

Recently, studies have been made to implement the iris authentication on a compact electronic apparatus or a portable electronic apparatus, such as a smartphone or the like. It is desirable to anticipate use of such electronic apparatuses under various environmental conditions. On the other hand, the iris pattern changes when the size of the pupil changes according to surrounding luminance (or brightness). For this reason, in a case in which the surrounding luminance at the time of registering the iris pattern and the surrounding luminance at the time of authenticating the iris pattern greatly differ, a probability of correctly recognizing the individual by personal authentication (or the authentication accuracy of the individual) deteriorates.

For example, Japanese Laid-Open Publication No. 2004-261515 proposes a method of detecting the luminance at the time of authenticating an iris image and controlling a lighting device to approximate the luminance at the time of registering the iris image. For example, Japanese Laid-Open Publication No. 2005-062990 proposes a method of selecting an optimum iris image for the authentication from a plurality of iris images that are detected using a plurality of different light sources. However, depending on the electronic apparatus, it may be difficult to control the luminance of the lighting device, or to provide the plurality of light sources. Particularly in the case of the portable electronic apparatus, even when the lighting device is controlled to control the luminance, it may be difficult to accurately control the luminance, depending on an environment in which the portable electronic apparatus is used. In addition, in the case of the portable electronic apparatus, it is difficult to provide a plurality of different light sources within a limited space available in the portable electronic apparatus. For these reasons, it is undesirable to control the lighting device or to use the plurality of light sources, in order to improve the authentication accuracy of the iris authentication.

On the other hand, Japanese Laid-Open Publication No. 2009-080706, for example, proposes a method of using a pupil diameter of a detected iris image for the authentication, by enlarging or reducing the pupil diameter according to a reference pupil diameter. However, in the case of the method that enlarges or reduces the pupil diameter according to the reference pupil diameter, an enlarging or reducing process must be performed every time the iris image is detected, and it takes time to perform the enlarging or reducing process. In addition, the authentication accuracy deteriorates due to the enlarging or reducing process performed on the iris image. Hence, it is undesirable to enlarge or reduce the iris image.

Furthermore, Japanese National Publication of International Patent Application No. 2004-511862, for example, proposes a method in which a plurality of reference iris images classified according to the pupil diameter size are registered, the pupil diameter of the input iris image is computed at the time of authentication, and the reference iris image belonging to the class corresponding to the computed pupil diameter is retrieved and compared to the input iris image. However, in this proposed method, a computation process to compute the pupil diameter for classification is performed every time the iris image is input at the time of the iris authentication, and an authentication time required for the authentication increases due to the time required to perform the computation process.

Accordingly, in the conventional iris authentication, it is difficult to reduce the authentication time in the case in which the input iris image is enlarged or reduced, or the computation process is performed on the input iris image.

### SUMMARY

Accordingly, it is an object in one aspect of the embodiments to provide an authentication apparatus, an authentication method, and an authentication program, which can reduce the authentication time.

According to one aspect of the embodiments, an authentication apparatus includes detecting means for detecting an environmental illuminance; retrieving means for retrieving, from a storage configured to store a plurality of registered iris data in association with registered environmental illuminances, one of the plurality of registered iris data stored in association with a registered environmental illuminance having a minimum difference with the environmental illuminance detected by the detecting means at a time of an authentication; imaging means for imaging an imaging target to obtain an image data at the time of the authentication; image processing means for extracting an input iris data from the image data obtained by the imaging means; and matching means for matching the input iris data to the one of the plurality of registered iris data retrieved by the retrieving means, wherein a first process that includes the detecting by the detecting means and the retrieving by the retrieving means, and a second process that includes the imaging by the imaging means, the extracting by the image processing means, and the matching by the matching means, are executed in parallel.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 is a block diagram illustrating an example of an authentication apparatus in a first embodiment;
FIG. 2 is a flow chart for explaining an example of an illuminance detection process;
FIG. 3 is a flow chart for explaining an example of a registration process of the authentication apparatus in the first embodiment;
FIG. 4 is a diagram illustrating an example of registered data;
FIG. 5 is a flow chart for explaining an example of an authentication process in the first embodiment;
FIG. 6 is a flow chart for explaining an example of a retrieval process to retrieve registered iris data;
FIG. 7 is a flow chart for explaining another example of the authentication process in the first embodiment;
FIGs. 8A, 8B, and 8C are diagrams for explaining parallel processing of the authentication process;
FIG. 9 is a block diagram illustrating an example of the authentication apparatus in a second embodiment;
FIG. 10 is a flow chart for explaining an example of the registration process of the authentication apparatus in the second embodiment; and
FIG. 11 is a flow chart for explaining an example of the authentication process in the second embodiment.

### DESCRIPTION OF EMBODIMENTS

Preferred embodiments of the present invention will be described with reference to the accompanying drawings.

In one embodiment, one of a plurality of registered iris data stored in association with a registered environmental (or surrounding) illuminance having a minimum difference with an environmental illuminance detected by a sensor at a time of an authentication, is retrieved from a storage that stores the plurality of registered iris data in association with registered environmental illuminances. An input iris data is extracted from image data of an imaging target imaged by a camera at the time of the authentication, and matched to the one of the plurality of registered iris data that are retrieved. A process that includes the detecting of the environmental illuminance and the retrieving of the input iris data, and a process that includes the imaging of the imaging target, the extracting and matching of the input iris data, are executed in parallel. For example, a personal identification of an individual who is the imaging target is successful in a case in which the input iris data and one of the plurality of registered iris data match.

A description will now be given of an authentication apparatus, an authentication method, and an authentication program in each embodiment according to the present invention.

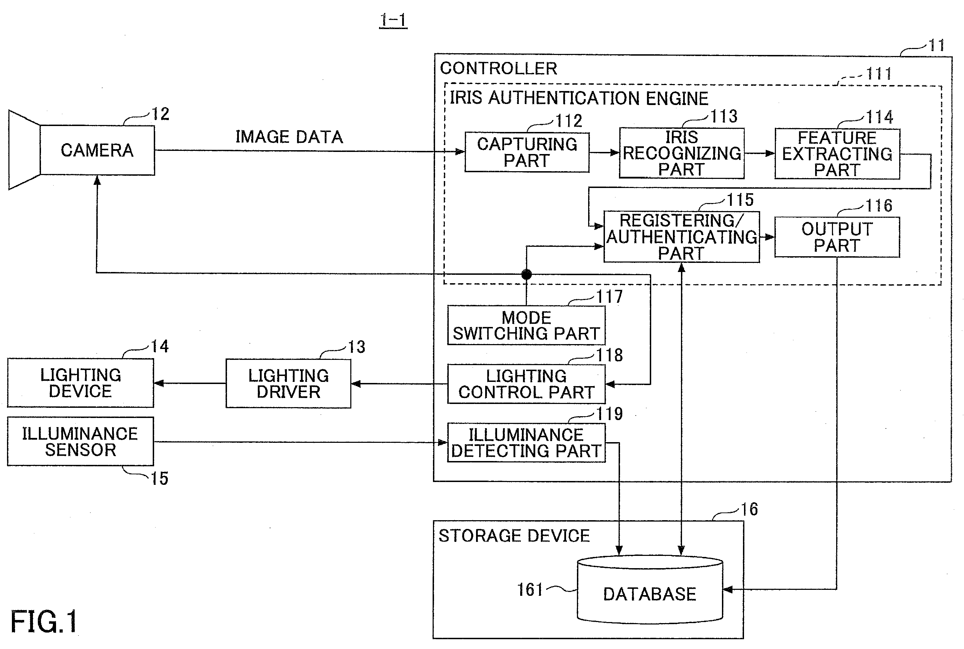

FIG. 1 is a block diagram illustrating an example of an authentication apparatus in a first embodiment. An authentication apparatus 1-1 illustrated in FIG. 1 authenticates an individual based on iris information, that is an example of biometric information. The authentication apparatus 1-1 includes a controller 11, a camera 12, a lighting driver 13, a lighting device 14, an illuminance sensor 15, and a storage device 16. The authentication apparatus 1-1 may be implemented in a general-purpose computer system or a terminal apparatus. In addition, the authentication apparatus 1-1 may be implemented in a portable electronic apparatus, such as a smartphone, a tablet, a laptop personal computer, or the like. At least a part of a storage region in the storage device 16 may be formed by an external storage (not illustrated) that is externally connected to the authentication apparatus 1-1 and is accessible from the controller 11.

The controller 11 may be formed by a processor, such as a CPU (Central Processing Unit), for example. The controller 11 includes an iris authentication engine 111, a mode switching part 117, a lighting control part 118, and an illuminance detecting part 119. The iris authentication engine 111 includes a capturing part 112, an iris recognizing part 113, a feature extracting part 114, a registering and authenticating part (hereinafter also referred to as a "registering/authenticating part") 115, and an output part 116.

The camera 12 is an example of an imaging part (or imaging means) that images (or picks up) an imaging target. The image data of the imaging target imaged by the camera 12 is input to the capturing part 112 of the iris authentication engine 111. In this example, the imaging target is an eye of a person who is to be authenticated. The capturing part 112 captures image data of an iris and a pupil from the image data of the eye, according to a known method. The iris recognizing part 113 recognizes an iris part from the captured image data, according to a known method. The feature extracting part 114 extracts feature points of the recognized iris part according to a known method, and generates iris data including the extracted feature points. The generated iris data is input to the registering/authenticating part 115. The registering/authenticating part 115 performs registration of the iris data, or performs matching of the iris data and registered iris data stored in the storage device 16, based on a mode signal from the mode switching part 117. The mode switching part 117 may be formed by an input part (not illustrated), such as a keyboard, of the authentication apparatus 1-1, for example, and outputs the mode signal that instructs an iris data registration process or an iris data authentication process. The output part 116 outputs a result of the iris data registration process or the iris data authentication process performed by the registering/authenticating part 115, to the storage device 16, and stores the iris data or the authentication data in the storage device 16, if necessary.

The lighting control part 118 of the controller 11 drives and controls the lighting device 14 via the lighting driver 13, so that the infrared light is irradiated on the imaging target. The lighting device 14emits the infrared light at a time of a registration process and at a time of an authentication process, which will be described later. The illuminance sensor 15 detects an environmental (or surrounding) illuminance in a vicinity of (or adjacent to) the imaging target irradiated with the infrared light, and outputs a detection signal to the illuminance detecting part 119 of the controller 11. The illuminance detecting part 119 detects the environmental illuminance at the time of the registration process and at the time of the authentication process, based on the detection signal, and stores environmental illuminance in the storage device 16. The illuminance sensor 15 and the illuminance detecting part 119 form an example of a detector (or detecting means) that detects the environmental illuminance. As will be described later, the storage device 16 stores iris data in association with the environmental illuminances.

The storage device 16 is an example of a storage, and may function as a temporary memory that temporarily stores the detected environmental illuminance, the iris data including the extracted feature points, or the like. The storage device 16 may store one or more programs executed by a processor (or computer) forming the controller 11, various parameters used by the one or more programs including an authentication program, and various data including intermediate results of computation processes performed by the one or more programs. The storage device 16 having stored therein one or more programs which, when executed by the processor (or computer), causes the processor (or computer) to perform a process such as the registration process, the authentication process, or the like, may be formed by a known non-transitory computer-readable storage medium. The non-transitory computer-readable storage medium may be formed by a magnetic recording medium, an optical recording medium, a magneto-optical recording medium, a semiconductor memory device, or the like.

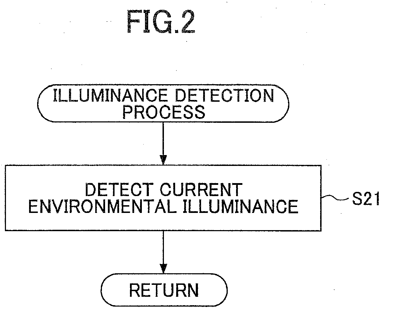

FIG. 2 is a flow chart for explaining an example of an illuminance detection process. The illuminance detection process illustrated in FIG. 2 is executed at the time of the registration process and at the time of the authentication process, which will be described later. When the illuminance detection process illustrated in FIG. 2 starts, the illuminance detecting part 119 of the controller 11, in step S21, detects a current environmental illuminance based on the detection signal output from the illuminance sensor 15, and temporarily stores the current environmental illuminance in the storage device 16. After step S21, the process returns to the registration process or the authentication process.

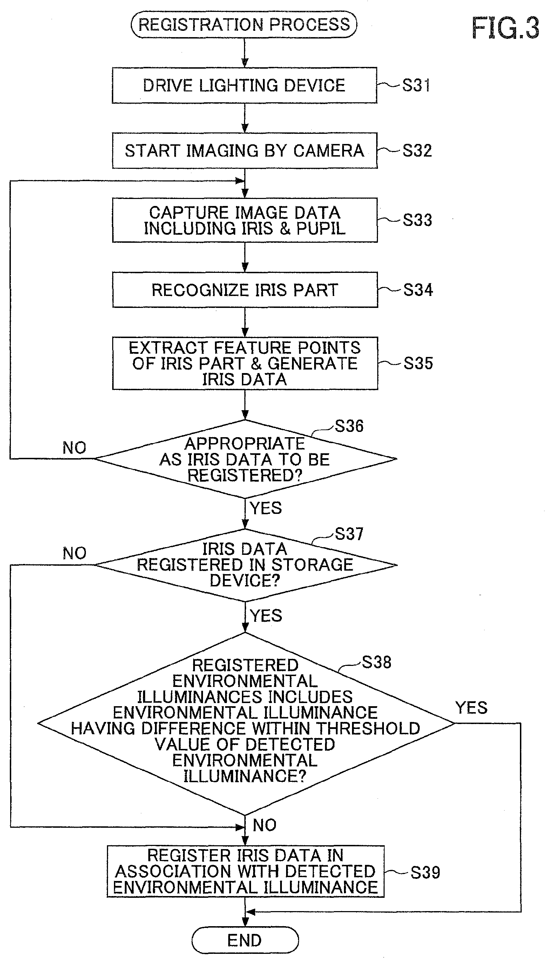

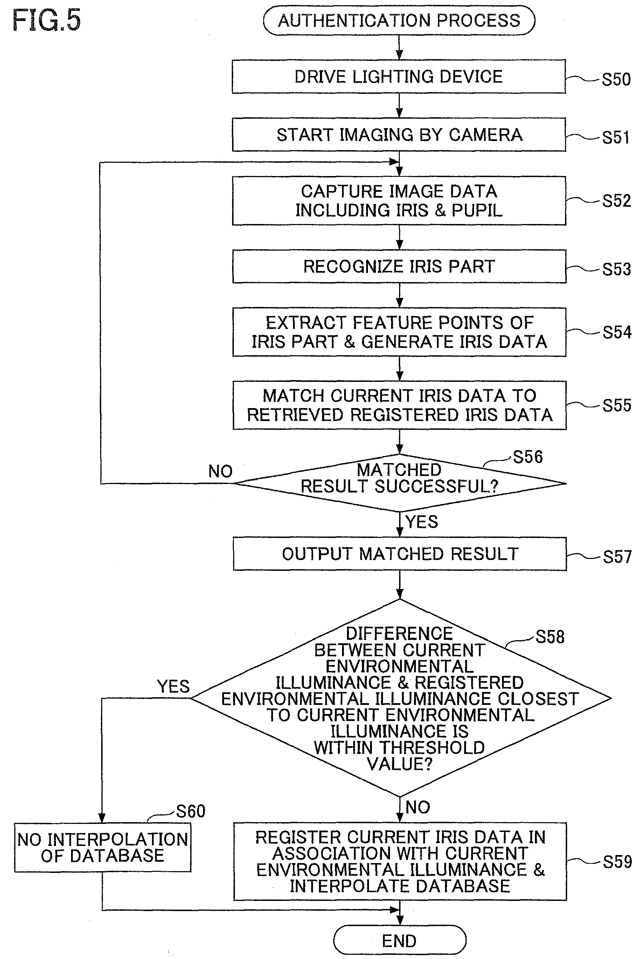

The illuminance detection process may be executed in parallel with an image process of the registration process or the authentication process, or may be executed prior to the image process. The image process (steps S31 through S35 illustrated in FIG. 3 which will be described later) of the registration process includes acquiring the image data imaged by the camera 12 and extracting the iris data, as will be described later. The image process (steps S52 through S55 illustrated in FIG. 5 which will be described later) of the authentication process includes acquiring the image data imaged by the camera 12, extracting the iris data, and matching the iris data, as will be described later.

FIG. 3 is a flow chart for explaining an example of the registration process of the authentication apparatus in the first embodiment. The registration process is executed prior to the authentication process, under a plurality of environmental illuminances, and registers the iris data by storing the iris data in the storage device 16 in association with the environmental illuminances. In a case in which the registration process illustrated in FIG. 3 is executed under two or more environmental illuminances, the registration process may be executed in a state in which lighting exists indoors (within a room, for example), a state in which no lighting exists indoors, and a state outdoors under the sun, for example.

When the mode switching part 117 of the controller 11 outputs the mode signal instructing the registration process and the registration process illustrated in FIG. 3 starts, the lighting control part 118 of the controller 11, in step S31, drives and controls the lighting device 14 via the lighting driver 13 based on the mode signal, in order to irradiate, as the lighting, the infrared light on the imaging target. The camera 12, in step S32, starts imaging the target image irradiated with the lighting from the lighting device 14, based on the mode signal.

In the iris authentication engine 111 of the controller 11, the capturing part 112, in step S33, captures the image data including the iris and the pupil from the image data of the eye, according to the known method. The iris recognizing part 113, in step S34, recognizes the iris part of the captured image data, according to the known method. The feature extracting part 114, in step S35, extracts the feature points of the recognized iris part, according to the known method, and generates and inputs to the registering/authenticating part 115 the iris data including the extracted feature points. The generated iris data is temporarily stored in the storage device 16. The registering/authenticating part 115, in step S36, judges whether the iris data including the extracted feature points is appropriate as the iris data to be registered, and the process returns to step S33 when the judgment result in step S36 is NO. The judgment result in step S36 becomes NO when the number of extracted feature points is less than a threshold value, for example. When the judgment result in step S36 is YES, the process advances to step S37.

The judgement to determine whether the iris data including the extracted feature points is appropriate as the iris data to be registered may be based on a judging reference other than the number of extracted feature points.

The registering/authenticating part 115, in step S37, judges whether the iris data including the extracted feature points is already registered in the storage device 16. When the judgment result in step S37 is NO, the process advances to step S39 which will be described later. On the other hand, when the judgment result in step S37 is YES, the process advances to step S38. The registering/authenticating part 115, in step S38, judges whether one of the environmental illuminances already registered in the storage device 16 has a difference that is within a threshold value of the environmental illuminance detected by the illuminance detecting part 119, and the process advances to step S39 when the judgment result in step S38 is NO. The registering/authenticating part 115, in step S39, registers the iris data including the feature points extracted by the feature extracting part 114, by storing the iris data in the storage device 16 in association with the environmental illuminance detected by the illuminance detecting part 119. The environmental illuminance that is registered in this manner is hereinafter also referred to as a "registered environmental illuminance", and the iris data that is registered in association with the environmental illuminance is hereinafter also referred to as a "registered iris data". When the judgment result in step S38 is YES, or after step S39, the registration process ends.

The registering/authenticating part 115 forms an example of a registering part (or registering means) that registers the iris data extracted by the iris authenticating engine 111 in the storage device 16 in association with the environmental illuminance detected by the illuminance detecting part 119, in a case in which no registered iris data is stored in the storage device 16 in association with a registered environmental illuminance having a difference less than or equal to the threshold value with respect to the environmental illuminance detected by the illuminance detecting part 119.

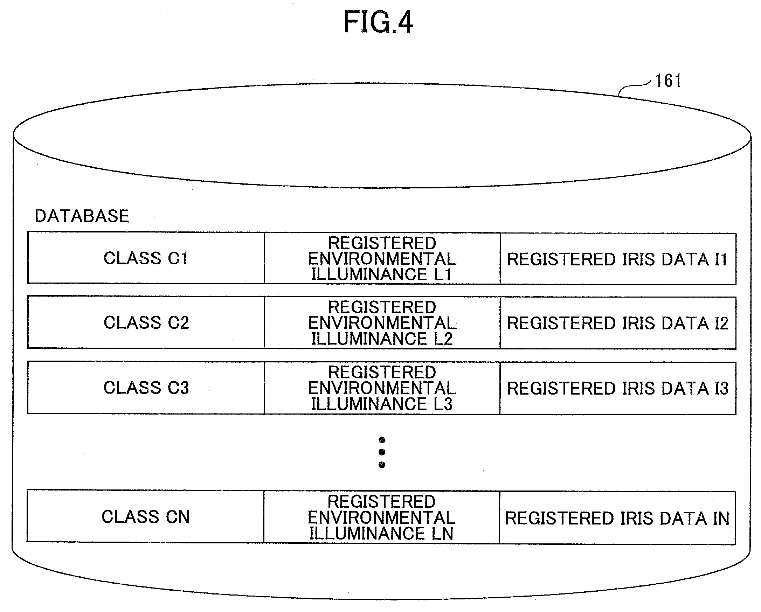

FIG. 4 is a diagram illustrating an example of registered data. In the example illustrated in FIG. 4, with respect to each class Ci (i = 1 to N, where N is a natural number greater than or equal to 1), a corresponding registered environmental illuminance Li, and a registered iris data Ii in association with the registered 7 environmental illuminance Li, form a database 161 within the storage device 16. Although FIG. 4 illustrates the registered data with respect to one authentication target, in a case in which a plurality of authentication targets exist and the authentication apparatus 1-1 is to authenticate a plurality of individuals, registered data similar to the registered data illustrated in FIG. 4 are registered in the storage device 16 with respect to each of the authentication targets. In this case, with respect to a class C3, for example, registered iris data I3-1 through I3-M (M is a natural number greater than or equal to 2) in association with a registered environmental illuminance L3 may be registered with respect to M authentication targets.

FIG. 5 is a flow chart for explaining an example of the authentication process in the first embodiment. The authentication process is executed at an arbitrary point in time after executing the registration process described above, under an arbitrary environmental illuminance. In addition, in a case in which appropriate registered data are not registered in the storage device 16, the database 161 is interpolated (or updated) by storing iris data in association with the environmental illuminance.

When the mode switching part 117 of the controller 11 outputs the mode signal instructing the authentication process and the authentication process illustrated in FIG. 5 starts, the lighting control part 118 of the controller 11, in step S50, drives and controls the lighting device 14 via the lighting driver 13 based on the mode signal, in order to irradiate, as the lighting, the infrared light on the imaging target. The camera 12, in step S51, starts imaging the target image irradiated with the lighting from the lighting device 14, based on the mode signal.

In the iris authentication engine 111 of the controller 11, the capturing part 112, in step S52, captures the image data including the iris and the pupil from the image data of the eye, according to the known method. The iris recognizing part 113, in step S53, recognizes the iris part of the captured image data, according to the known method. The feature extracting part 114, in step S54, extracts the feature points of the recognized iris part, according to the known method, and generates and inputs to the registering/authenticating part 115 the iris data including the extracted feature points. The generated iris data is temporarily stored in the storage device 16. The capturing part 112, the iris recognizing part 113, and the feature extracting part 114 form an example of an image processing part (or image processing means) that extracts the input iris data from the imaging target.

The registering/authenticating part 115, in step S55, matches the current iris data including the feature points extracted by the feature extracting part 114, to the registered iris data of the class corresponding to the current environmental illuminance detected by the illuminance detecting part 119, that is, the registered iris data in association with the registered environmental illuminance, retrieved from the database 161 within the storage device 16. The registering/authenticating part 115 forms an example of a matching part (or matching means) that matches the current iris data to the registered iris data that is retrieved, and outputs a matched result (or result of the matching).

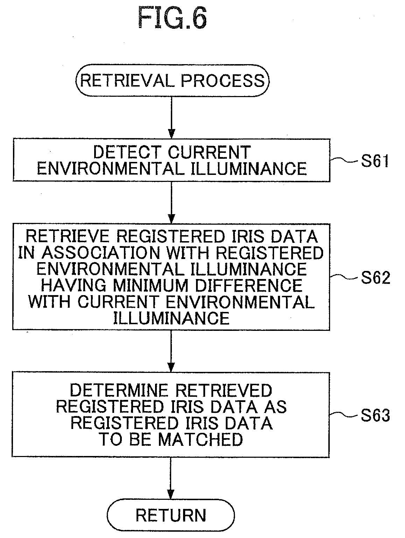

FIG. 6 is a flow chart for explaining an example of a retrieval process to retrieve the registered iris data. The retrieval process illustrated in FIG. 6 is an example of a first process, and is executed and completed before the process of step S55 illustrated in FIG. 5 starts. In step S61 illustrated in FIG. 6, the illuminance detecting part 119 detects the current environmental illuminance based on the detection signal output from the illuminance sensor 15. The current environmental illuminance that is detected is temporarily stored in the storage device 16. The registering/authenticating part 115, in step S62, retrieves from the database 161 within the storage device 16 the class of the registered environmental illuminance closest to the current environmental illuminance that is detected, that is, the registered iris data in association with the registered environmental illuminance having a minimum difference with the current environmental illuminance. The registering/authenticating part 115, in step S63, determines the registered iris data that is retrieved as the registered iris data to be matched to the iris data including the feature points extracted by the feature extracting part 114, and the process returns to the authentication process of FIG. 5 to advance to step S56. The registering/authenticating part 115 forms an example of a retrieving part (or retrieving means) that retrieves, from the storage device 16 storing the plurality of registered iris data in association with the plurality of registered environmental illuminances, the registered iris data stored in association with the registered environmental illuminance having the minimum difference with the environmental illuminance detected at the time of the authentication.

The retrieval process that is executed and completed before the process of step S55 illustrated in FIG. 5 starts, may be executed in parallel with the imaging process of the authentication process, or prior to the imaging process. The imaging process (steps S52 through S55) of the authentication process is an example of a second process, and includes acquiring the image data imaged by the camera 12, extracting the iris data, and matching the iris data. On the other hand, the retrieval process (steps S61 through S63) includes detecting the illuminance, and retrieving the registered iris data to be matched.

Returning now to the description of the authentication process illustrated in FIG. 5, the registering/authenticating part 115, in step S56, judges whether the matched result in step S55 indicates a successful match, and the process returns to step S52 when the judgment result in step S56 is NO. The matched result in step S55 may be judged to be a successful match when the current iris data and the registered iris data that is retrieved match, or when a difference between the current iris data and the registered iris data that is retrieved is less than or equal to a predetermined value. In a case in which the matched result in step S55 indicates the successful match, a personal identification of the individual who is the imaging target is successful. When the judgment result in step S56 is YES, the output part 116, in step S57, outputs the matched result, that is, the result of the authentication process, and stores the matched result in a log within the storage device 16, if necessary. As a result, the authentication itself ends.

However, it may be desirable to register the current iris data in the storage device 16. Hence, in this embodiment, the process advances to step S58 after step S57. The registering/authenticating part 115, in step S58, judges whether the difference between the current environmental illuminance and the registered environmental illuminance closest to the current environmental illuminance is within the threshold value. When the judgment result in step S58 is NO, the registering/authenticating part 115, in step S59, registers the current iris data in the database 161 within the storage device 16, in association with the current environmental illuminance, in order to interpolate (or update) the database 161. On the other hand, when the judgment result in step S58 is YES, the registering/authenticating part 115, in step S60, does not interpolate (or update) the database 161, and discards the current iris data and the current environmental illuminance that are temporarily stored in the storage device 16. The authentication process ends after step S59 or step S60. Accordingly, in the case in which no registered iris data is stored in the storage device 16 in association with the registered environmental illuminance having the difference less than or equal to the threshold value with respect to the current environmental illuminance, the current iris data is registered in the storage device 16 in association with the current environmental illuminance.

By interpolating (or updating) the database 161 within the storage device 16 in the manner described above, it is possible to improve the probability of correctly recognizing the individual by the personal identification (or authentication accuracy) as the number of times the authentication apparatus 1-1 is used increases, and the authentication to authenticate the authenticating target by the personal identification of the individual can be performed with a high accuracy.

The threshold value that is used for the condition to judge whether to make the registration to the database 161 in step S38 illustrated in FIG. 3, and the threshold value that is used for the condition to judge whether to interpolate (or update) the database 161 in step S58 illustrated in FIG. 5, may be determined according to conditions in which the authentication apparatus 1-1 is used, such as specifications related to the memory capacitor or the like, for example.

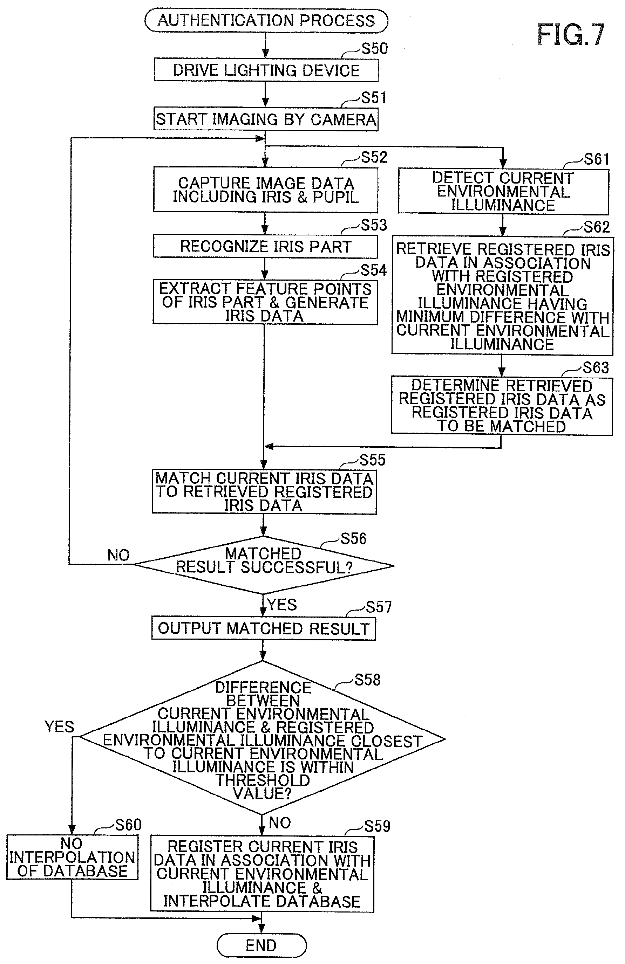

FIG. 7 is a flow chart for explaining another example of the authentication process in the first embodiment. In FIG. 7, those steps that are the same as those corresponding steps in FIGs. 5 and 6 are designated by the same reference numerals, and a description thereof will be omitted. In the authentication process illustrated in FIG. 7, the image process of steps S52 through S55 and the retrieval process of steps S61 through S63 are executed in parallel. For example, in a case in which the controller 11 is formed by a multi-core processor, the parallel processing of the image process and the retrieval process may be executed by different cores of the multi-core processor.

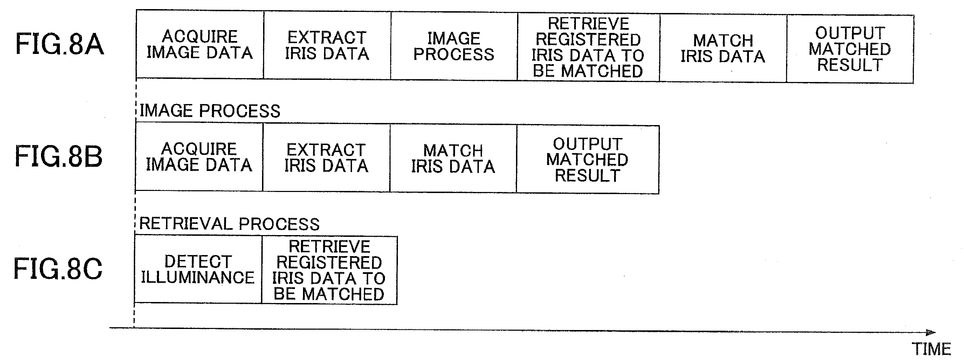

FIGs. 8A, 8B, and 8C are diagrams for explaining parallel processing of the authentication process. FIG. 8A illustrates the authentication process in accordance with the method proposed in Japanese Laid-Open Publication No. 2009-080706 or Japanese National Publication of International Patent Application No. 2004-511862 referred above, for example. FIGs. 8B and 8C illustrate the authentication process in which the image process and the retrieval process are executed in parallel as in the example illustrated in FIG. 7. In FIGs. 8A, 8B, and 8C, the abscissa indicates the time in arbitrary units.

In the case illustrated in FIG. 8A, the authentication process includes acquiring the image data, extracting the iris data, an image process including an enlarge or reduce process or a computation process with respect to the iris data, retrieving the registered iris data to be matched, and matching the iris data. The authentication time is long because outputting the matched result includes outputting the result of the image process.

On the other hand, in the case of the authentication process illustrated in FIG. 7, the image process illustrated in FIG. 8B and the retrieval process illustrated in FIG. 8C can be executed in parallel. In this case, the image process includes acquiring the image data, extracting the iris data, and matching the iris data, and the outputting the matched result includes outputting the result of the image process. On the other hand, the retrieval process in this case includes detecting the illuminance, and retrieving the registered iris data to be matched, and this retrieval process is executed and completed before the matching of the iris data in the image process starts. In the authentication process illustrated in FIG. 7, the image process may be executed by a first code of the multi-core processor, and the retrieval process may be executed in parallel with the authentication process by a second core of the multi-core processor. By executing the authentication process in this manner by distributed processing, the authentication time required in the case illustrated in FIGs. 8B and 8C can be shorted compared to the authentication time required in the case illustrated in FIG. 8A.

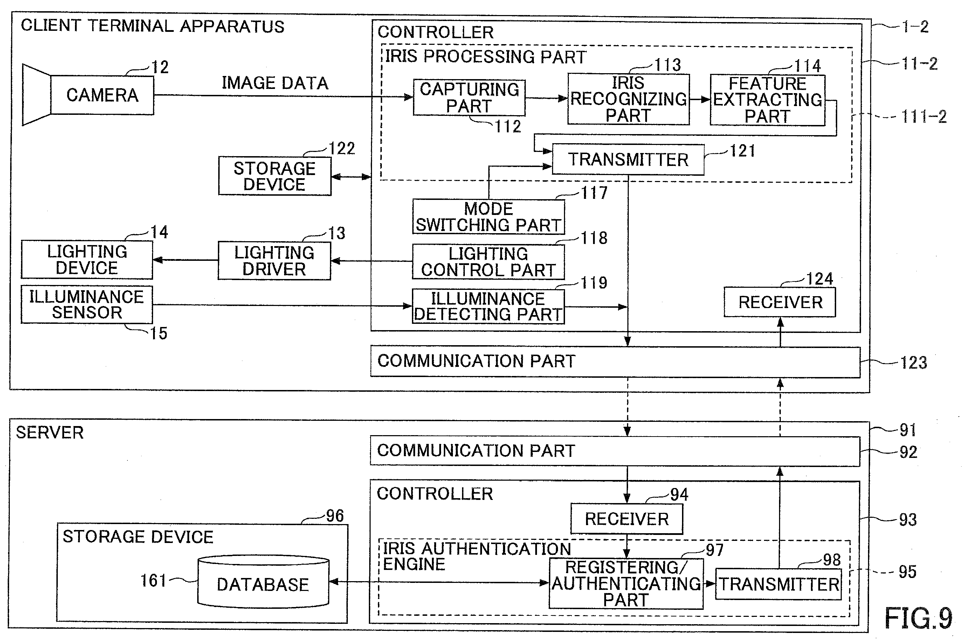

FIG. 9 is a block diagram illustrating an example of the authentication apparatus in a second embodiment. In FIG. 9, those parts that are the same as those corresponding parts in FIG. 1 are designated by the same reference numerals, and a description thereof will be omitted. In this embodiment, a part of the process executed by the authentication apparatus 1-1 in the first embodiment described above is executed by a server 91 that is communicable with a client terminal apparatus 1-2. In addition, the database 161 is stored in a storage device 96 within the client terminal apparatus 1-2. The server 91 is an example of an external information processing apparatus that is communicable with the client terminal apparatus 1-2. The server 91 may be formed by one or a plurality of information processing apparatuses (or computers) forming a cloud computing system, for example.

On the other hand, the client terminal apparatus 1-2 may be formed by a general-purpose computer system having a communication function. In addition, the client terminal apparatus 1-2 may be formed by a portable electronic apparatus having the communication function, such as a smartphone, a tablet, a laptop personal computer, or the like. The client terminal apparatus 1-2 may form a server-client system together with the server 91. Wireless communication between the client terminal apparatus 1-2 and the server 91 is not limited to a particular type of communication.

In FIG. 9, the client terminal apparatus 1-2 includes a transmitter 121, a storage device 122, a communication part 123, and a receiver 124. The transmitter 121 is included in an iris processing part 111-2, and the receiver 124 is included in a controller 11-2. The transmitter 121 transmits the iris data to the server 91 via the communication part 123. The receiver 124 receives the matched result from the server 91 via the communication part 123. The storage device 122 temporarily store the current environmental illuminance, the current iris data, or the like, if necessary.

The server 91 includes a communication part 92, a controller 93, and a storage device 96. The controller 93 may be formed by a processor, such as a CPU (Central Processing Unit) or the like. The controller 93 includes a receiver 94 and an iris authentication engine 95. The iris authentication engine 95 executes a part of the process of the iris authentication engine 111 of the first embodiment described above. The iris authentication engine 95 includes a registering/authenticating part 97 that executes the process of the registering/authenticating part 115 of the first embodiment described above, and a transmitter 98. The storage device 96 includes the database 161 of the first embodiment described above. The receiver 94 receives the iris data from the client terminal apparatus 1-2 via the communication part 92. The communication part 98 transmits the matched result to the client terminal apparatus 1-2 via the communication part 92.

By executing a part of the registration process and a part of the authentication process in the server 91, it is possible to reduce the load of the process on the client terminal apparatus 1-2. In addition, by storing the database 161 in the storage device 96 on the side of the server 91, it is possible to execute the registration process with respect to the database 161 and the authentication process using the database 161, regardless of the memory capacity of the client terminal apparatus 1-2, even in a case in which the data size in the database 161 is large.

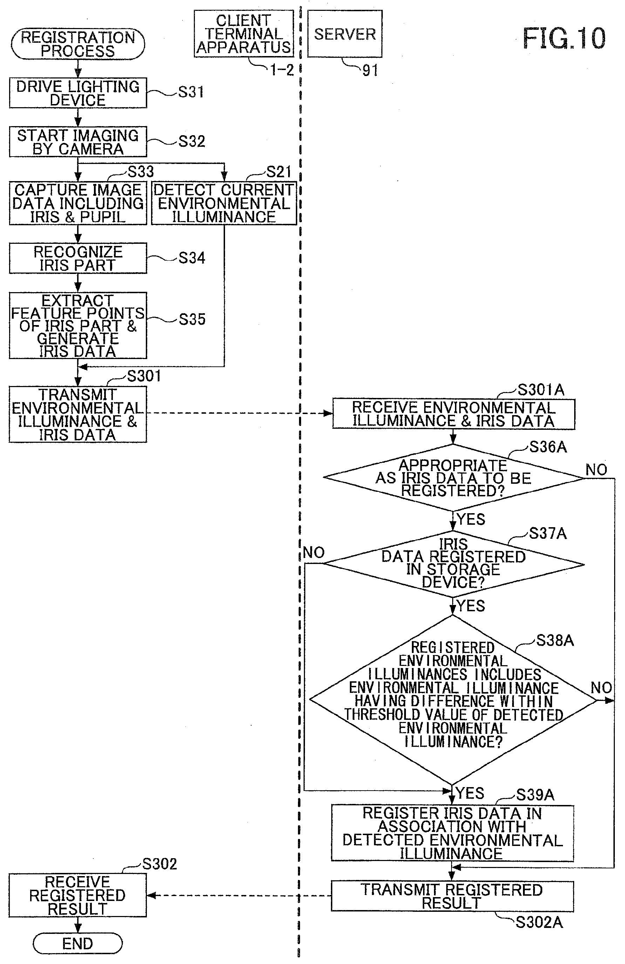

FIG. 10 is a flow chart for explaining an example of the registration process of the authentication apparatus in the second embodiment. In FIG. 10, those steps that are the same as those corresponding steps in FIG. 3 are designated by the same reference numerals, and a description thereof will be omitted. In FIG. 10, the process on the left side of the dotted line is executed by the client terminal apparatus 1-2, and the process on the right side of the dotted line is executed by the server 91.

In the client terminal apparatus 1-2, when the mode switching part 117 of the controller 11 outputs the mode signal instructing the registration process, the registration process illustrated in FIG. 10 starts. The process of steps S31 through S35 is executed in a manner similar to the case of the first embodiment described above. Further, in this example, the process of step S21 is executed in parallel with the process of steps S33 through S35. After step S35 or step S21, the process advances to step S301. The transmitter 121, in step S301, temporarily stores the iris data generated in step S35 and the environmental illuminance detected in step S21, in the storage device 122, if necessary, and transmits the generated iris data and the detected environmental illuminance to the server 91 via the communication part 123.

In the server 91, the receiver 94, in step S301A, receives the iris data and the environmental illuminance transmitted from the client terminal apparatus 1-2, via the communication part 92, and temporarily stores the iris data and the environmental illuminance in the storage device 96, if necessary. The registering/authenticating part 97, in step S36A, judges whether the iris data including the extracted feature points and received from the client terminal apparatus 1-2 is appropriate as the iris data to be registered, and the process advances to step S302A which will be described later when the judgment result in step S36A is NO. The judgment result in step S36A becomes NO when the number of extracted feature points is less than the threshold value, for example. When the judgment result in step S36A is YES, the process advances to step S37A.

The registering/authenticating part 97, in step S37A, judges whether the iris data including the extracted feature points is already registered in the storage device 96. When the judgment result in step S37A is NO, the process advances to step S39A which will be described later. On the other hand, when the judgment result in step S37A is YES, the process advances to step S38A. The registering/authenticating part 97, in step S38A, judges whether one of the environmental illuminances already registered in the storage device 96 has the difference that is within the threshold value of the environmental illuminance detected by the illuminance detecting part 119, and the process advances to step S39A when the judgment result in step S38A is YES. The registering/authenticating part 97, in step S39A, registers the iris data including the feature points extracted by the feature extracting part 114, by storing the iris data in the storage device 96 in association with the environmental illuminance detected by the illuminance detecting part 119, in a manner similar to FIG. 4. After step S39A, the transmitter 98, in step S302A, transmits a registered result indicating that new registered data is registered in the storage device 96, to the client terminal apparatus 1-2 via the communication part 92, and the registration process on the side of the server 91 ends. In addition, when the judgment result in step S38A is NO, the transmitting part 98, in step S302A, transmits a registered result indicating that no new registered data is registered in the storage device 96, to the client terminal apparatus 1-2 via the communication part 92, and the registration process on the side of the server 91 ends.

On the other hand, in the client terminal apparatus 1-2, the receiver 124, in step S302, receives the registered result transmitted from the server 91 via the communication part 123, and the registration process on the side of the client terminal apparatus 1-2 ends.

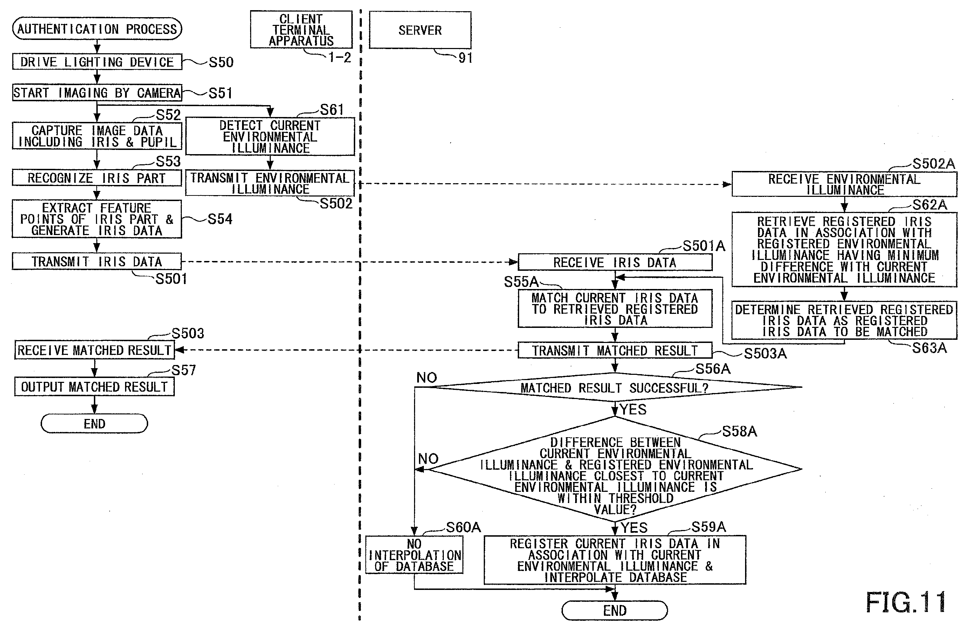

FIG. 11 is a flow chart for explaining an example of the authentication process in the second embodiment. In FIG. 11, those steps that are the same as those corresponding steps in FIG. 7 are designated by the same reference numerals, and a description thereof will be omitted. In FIG. 11, the process on the left side of the dotted line is executed by the client terminal apparatus 1-2, and the process on the right side of the dotted line is executed by the server 91.

In the client terminal apparatus 1-2, when the mode switching part 117 of the controller 11 outputs the mode signal instructing the authentication process, the authentication process illustrated in FIG. 11 starts. The process of steps S50 through S54 is executed in a manner similar to the case of the first embodiment described above. Further, in this example, the process of steps S61, S62 and S63A is executed in parallel with the process of steps S52 through S54 and S55A. After step S54, the process advances to step S501. The transmitter 121, in step S501, temporarily stores the iris data generated in step S54 in the storage device 122, if necessary, and transmits the generated iris data to the server 91 via the communication part 123. In addition, after step S61, the process advances to step S502. The transmitter 121, in step S502, temporarily stores the environmental illuminance detected in step S61 in the storage device 122, if necessary, and transmits the detected environmental illuminance to the server 91 via the communication part 123.

In the server 91, the receiver 94, in step S501A, receives the iris data transmitted from the client terminal apparatus 1-2 via the communication part 92, and temporarily stores the iris data in the storage device 96, if necessary. After step S501A, the process advances to step S55A. On the other hand, the receiver 94, in step S502A, receives the environmental illuminance transmitted from the client terminal apparatus 1-2 via the communication part 92, and temporarily stores the environmental illuminance in the storage device 96, if necessary. After step S502A, the process advances to step S62A. The registering/authenticating part 97, in step S62A, retrieves from the database 161 within the storage device 96 the class of the registered environmental illuminance closest to the current environmental illuminance that is detected, that is, the registered iris data in association with the registered environmental illuminance having the minimum difference with the current environmental illuminance. The registering/authenticating part 97, in step S63A, determines the registered iris data that is retrieved as the registered iris data to be matched to the iris data including the feature points extracted by the feature extracting part 114, and the process advances to step S55A.

The retrieval process that is executed and completed before the process of step S55A illustrated in FIG. 11 starts may be executed in parallel with the image process of the authentication process, or may be executed prior to the image process. The image process (steps S52 through S54 and S55A) of the authentication process includes acquiring the image data, extracting the iris data, and matching the iris data. On the other hand, the retrieval process (steps S61, S62A, and S63A) includes detecting the illuminance, and retrieving the registered iris data to be matched.

The registering/authenticating part 97, in step S55A, matches the current iris data including the feature points extracted by the feature extracting part 114, to the registered iris data of the class corresponding to the current environmental illuminance detected by the illuminance detecting part 119, that is, the registered iris data in association with the registered environmental illuminance, retrieved from the database 161 within the storage device 96. The transmitter 98, in step S503A, transmits the matched result of step S55A to the client terminal apparatus 1-2 via the communication part 92.

In the client terminal apparatus 1-2, the receiver 124, in step S503, receives the matched result transmitted from the server 91. The transmitter 121, in step S57, outputs the matched result, that is, the result of the authentication process, and stores the matched result in the log within the storage device 122, if necessary. As a result, the authentication itself ends, and the authentication process on the side of the client terminal apparatus 1-2 ends.

On the other hand, in the server 91, after step S503A, the process advances to step S56A. The registering/authenticating part 97, in step S56A, judges whether the matched result in step S55A indicates a successful match, and the process advances to step S60A which will be described later when the judgment result in step S56A is NO. The matched result in step S55A may be judged to be a successful match when the current iris data and the registered iris data that is retrieved match, or when the difference between the current iris data and the registered iris data that is retrieved is less than or equal to the predetermined value. In a case in which the matched result in step S55A indicates the successful match, a personal identification of the individual who is the imaging target is successful. When the judgment result in step S56A is YES, the registering/authenticating part 97, in step S58A, judges whether the difference between the current environmental illuminance and the registered environmental illuminance closest to the current environmental illuminance is within the threshold value. When the judgment result in step S58A is NO, the registering/authenticating part 97, in step S59A, registers the current iris data in the database 161 within the storage device 96, in association with the current environmental illuminance, in order to interpolate (or update) the database 161. On the other hand, when the judgment result in step S58A is YES, the registering/authenticating part 97, in step S60A, does not interpolate (or update) the database 161, and discards the current iris data and the current environmental illuminance that are temporarily stored in the storage device 96. The authentication process on the side of the server 91 ends after step S59A or step S60A. Accordingly, in the case in which no registered iris data is stored in the storage device 96 in association with the registered environmental illuminance having the difference less than or equal to the threshold value with respect to the current environmental illuminance, the current iris data is registered in the storage device 96 in association with the current environmental illuminance.

By interpolating (or updating) the database 161 within the storage device 96 in the manner described above, it is possible to improve the probability of correctly recognizing the individual by the personal identification (or authentication accuracy) as the number of times the authentication is performed using the client terminal apparatus 1-2 increases, and the authentication to authenticate the authenticating target by the personal identification of the individual can be performed with a high accuracy.

According to each of the embodiments described above, it is possible to reduce the authentication time. In addition, it is possible to execute the registration process and the authentication process under various environmental illuminances, such as under the sun or at a dark location. Furthermore, by using the registered data hat are registered by the registration process, it is possible to execute the authentication process within a short time and with a high accuracy, regardless of the environmental illuminance.

The description above use terms such as "determine", "identify", or the like to describe the embodiments, however, such terms are abstractions of the actual operations that are performed. Hence, the actual operations that correspond to such terms may vary depending on the implementation, as is obvious to those skilled in the art.

Although the embodiments are numbered with, for example, "first," or "second," the ordinal numbers do not imply priorities of the embodiments. Many other variations and modifications will be apparent to those skilled in the art.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. An authentication apparatus (1-1) comprising:
detecting means (15, 119) for detecting an environmental illuminance;
retrieving means (115) for retrieving, from a storage (16) configured to store a plurality of registered iris data in association with registered environmental illuminances, one of the plurality of registered iris data stored in association with a registered environmental illuminance having a minimum difference with the environmental illuminance detected by the detecting means at a time of an authentication;
imaging means (12) for imaging an imaging target to obtain an image data at the time of the authentication;
image processing means (112-114) for extracting an input iris data from the image data obtained by the imaging means; and
matching means (115) for matching the input iris data to the one of the plurality of registered iris data retrieved by the retrieving means,
wherein a first process (S51-S63) that includes the detecting by the detecting means and the retrieving by the retrieving means, and a second process (S52-S55) that includes the imaging by the imaging means, the extracting by the image processing means (112-114), and the matching by the matching means, are executed in parallel.

2. The authentication apparatus as claimed in claim 1, wherein the first process (S61-S63) is executed and completed before the matching (S55) by the matching means (115) starts.

3. The authentication apparatus as claimed in claim 1 or 2, further comprising:
registering means (115) for registering, in the storage (16), the input iris data extracted by the image processing means (112-114) in association with the environmental illuminance detected by the detecting means (15, 115), in a case in which no registered iris data is stored in the storage in association with a registered environmental illuminance having a difference less than or equal to a threshold value with respect to the environmental illuminance detected by the detecting means (15, 115).

4. The authentication apparatus as claimed in any of claims 1 to 3, further comprising:
the storage (16).

5. The authentication apparatus as claimed in any of claims 1 to 4, further comprising:
a lighting device (14) configured to irradiate infrared light on the imaging target at the time of the authentication.

6. An authentication method comprising:
detecting, by a sensor (15) of a terminal apparatus (1-1, 1-2), an environmental illuminance;
imaging, by a camera (12) of the terminal apparatus, an imaging target to obtain an image data at a time of an authentication;
extracting, by an image processing part (112-114) of the terminal apparatus, an input iris data from the image data obtained by the imaging;
retrieving, by a retrieving part (115, 97), from a storage (16, 96) configured to store a plurality of registered iris data in association with registered environmental illuminances, one of the plurality of registered iris data stored in association with a registered environmental illuminance having a minimum difference with the environmental illuminance detected by the detecting at the time of the authentication; and
matching, by a matching part (115, 97), the input iris data to the one of the plurality of registered iris data retrieved by the retrieving,
wherein a first process (S61-S63; S61, S62A, S63A) that includes the detecting and the retrieving, and a second process (S52-S55; S52-S54, S55A) that includes the imaging, the extracting, and the matching, are executed in parallel.

7. The authentication method as claimed in claim 6, wherein the first process is executed and completed before the matching by the matching part (115, 97) starts.

8. The authentication method as claimed in claim 6 or 7, further comprising:
registering, in the storage (16, 96) by a registering part (115, 97), the input iris data extracted by the extracting in association with the environmental illuminance detected by the detecting, in a case in which no registered iris data is stored in the storage in association with a registered environmental illuminance having a difference less than or equal to a threshold value with respect to the environmental illuminance detected by the detecting.

9. The authentication method as claimed in any of claims 6 to 8, further comprising:
irradiating, by a lighting device (14) of the terminal apparatus (1-1, 1-2), infrared light on the imaging target at the time of the authentication.

10. The authentication method as claimed in any of claims 6 to 9, wherein the retrieving retrieves from the storage (16) provided within the terminal apparatus (1-1, 1-2).

11. The authentication method as claimed in any of claims 6 to 8, wherein the retrieving and the matching are executed by the retrieving part (97) and the matching part (97) of an information processing apparatus (91) that is communicable with the terminal apparatus (1-2).

12. The authentication method as claimed in claim 11, wherein the retrieving retrieves from the storage (96) provided within the information processing apparatus (91).

13. The authentication method as claimed in claim 8, wherein the registering is executed by the registering part (97) of an information processing apparatus (91) that is communicable with the terminal apparatus (1-2).

14. An authentication program which, when executed by a computer (11, 93), causes the computer to perform a process comprising:
retrieving, from a storage (16, 96) configured to store a plurality of registered iris data in association with registered environmental illuminances, one of the plurality of registered iris data stored in association with a registered environmental illuminance having a minimum difference with an environmental illuminance detected by a sensor (15) at a time of an authentication;
extracting an input iris data from an image data of an imaging target imaged by a camera (12) at the time of the authentication; and
matching the input iris data to the one of the plurality of registered iris data retrieved by the retrieving,
wherein a first process (S61-S63) that includes the detecting, and a second process (S52-S55) that includes the extracting and the matching, are executed in parallel.

15. The authentication program as claimed in claim 14, wherein the first process is executed and completed before the matching starts.
